# FASCICULE DE BREVET EUROPEEN

(11) **EP 0 474 531 B1**
(45) Date de publication et mention de la délivrance du brevet: **02.11.1995**
(21) Numéro de dépôt: 91402238.9
(22) Date de dépôt: 13.08.1991
(51) Int. Cl.: C03B 23/033, C03B 27/044, C03B 35/16, C03B 35/18

(54) **Procédé et dispositif d'obtention de feuilles de verre bombées**
Verfahren und Vorrichtung zum Biegen von Glasscheiben
Method and apparatus for bending glass sheets

(30) Priorité: 23.08.1990 FR 9010585
(43) Date de publication de la demande: 11.03.1992
(73) Titulaire: SAINT-GOBAIN VITRAGE, 92400 Courbevoie (FR)
(72) Inventeur: Letemps, Bernard, F-60150 Thourotte (FR); Mauri, Cesar, Milan 3 (IT)
(74) Mandataire: Menes, Catherine

(56) Documents cités:
- EP-A- 0 263 030
- EP-A- 0 373 265
- FR-A- 2 221 409
- US-A- 4 556 406

## Description

L'invention a trait aux techniques d'obtention de feuilles de verre bombées et éventuellement trempées thermiquement, notamment bombées selon des formes complexes non cylindriques. Plus particulièrement l'invention concerne celles de ces techniques dans lesquelles les feuilles de verre sont amenées à défiler sur un lit de conformation constitué par des tiges conformatrices par exemple des éléments tournants disposées selon un trajet à profil courbe dans la direction de défilement des feuilles de verre. L'invention s'applique par exemple à la réalisation de vitrages automobiles, par exemple du type custodes, ou vitres latérales.

Ces techniques de bombage-trempe sont connues par exemple du brevet français 2 442 219 qui propose de préchauffer les feuilles de verre à température de ramollissement puis de les faire défiler sur un convoyeur prolongeant sans cassure le chemin suivi par la feuille de verre depuis le four, ledit convoyeur formant un lit de conformation passant au travers d'une zone terminale de trempe et étant constitué par des éléments tournants disposés selon un trajet à profil courbe, en pratique un profil circulaire avec une concavité de préférence tournée vers le haut. Dans ce cas, la trajectoire suivie par la feuille de verre n'est donc pas plane mais cylindrique, les génératrices du cylindre étant horizontales et de préférence perpendiculaires à la direction d'amenée du verre celui-ci étant amené à plat dans l'installation.

Le rayon du trajet des éléments tournants correspond au rayon de courbure conféré à la feuille de verre dans la direction parallèle à la direction de défilement. A cette première courbure peut venir s'ajouter une courbure secondaire obtenue par l'utilisation d'éléments tournants non pas constitués par des tiges droites non cintrées mais par des rouleaux en forme par exemple du type guidons, rouleaux ventrus associés à des diabolos ou encore tiges contre-fléchies. Suivant la courbure des éléments tournants, on peut ainsi réaliser des formes de vitrage toriques de révolution dont le rayon de courbure varie entre 1 mètre et l'infini pour la courbure principale et entre 20 mètres et l'infini pour la courbure secondaire, l'infini correspondant à des rouleaux droits et donc à une forme cylindrique.

Ces techniques qui opèrent sur des feuilles de verre continuellement en mouvement peuvent être mises en oeuvre avec des cadences de production avantageusement très grandes, ceci en raison de la vitesse élevée de défilement, généralement pas inférieure à 10 mètres/seconde ne serait-ce que pour éviter des déformations du verre entre les rouleaux et, du fait que rien n'interdit de se faire suivre des feuilles de verre espacées les unes des autres de seulement quelques centimètres. Mais cette cadence avantageuse s'obtient au prix d'une limitation des formes de vitrages susceptibles d'être ainsi produites qui doivent être exclusivement toriques (cylindre ou tore de révolution mais avec un rayon de courbure secondaire le plus souvent grand par rapport au rayon de courbure principal).

Si cette forme torique est en pratique la plus communément répandue dans les vitrages destinés aux portes latérales des automobiles, elle n'est pas pour autant la seule utilisée et les designers conçoivent aujourd'hui de nombreux modèles automobiles dont certains des vitrages sont de forme complexe avec notamment un rayon de courbure non constant dans une direction donnée. Ces vitrages ne peuvent à ce jour être obtenus que par application contre une forme de bombage et/ou un lâcher sur un cadre de bombage, ce qui suppose bien sûr une interruption du défilement des feuilles de verte et un espacement relativement grand de celles-ci (lorsqu'une première feuille est en cours de bombage, l'outil de bombage est indisponible pendant toute la durée du bombage alors que dans une installation telle que décrite dans le brevet français 2 442 219, le bord extérieur d'une feuille de verte peut pénétrer dans la zone de conformation alors que le bord postérieur de la feuille précédente s'y trouve encore). Il est par exemple décrit dans le brevet EP-A-373 265, un procédé de bombage selon lequel on fait rouler, sur une feuille de verte, une forme de bombage munie d'orifices de succions de manière à ce que la feuille vienne s'enrouler autour de la forme. La feuille est ensuite retirée à l'aide d'un pick-up.

Toutefois, le brevet US-A-4 556 406 décrit un procédé en continu permettant d'obtenir un rayon de courbure non constant dans une direction d'onnées, le bombage étant suivi d'une phase de trempe. Le procédé de bombage est du type formage sur rouleaux et nécessite un ensemble de rouleaux montés sur un cadre pivotant assurant le transfert d'une feuille de verre du convoyeur sortant du four vers la zone de formage. Le temps séparant deux feuilles de verte est donc au moins égal au temps nécessaire au cadre pivotant pour faire un aller-retour plus le temps nécessaire pour qu'une feuille de verte passe du convoyeur issu du four sur le cadre pivotant.

En dehors de cet aspect limitation des cadences de production, on est également confronté au problème de la parfaite maîtrise de la courbure effectivement conférée lors du bombage et de l'exclusion de toute déformation parasite due par exemple à l'affaissement du verte sous son propre poids. Ces déformations parasites se produisent généralement lors du transfert de la feuille de verre de la station de bombage à la station de trempe et sont souvent d'autant plus difficiles à éviter que la courbure conférée à la feuille de verte est faible, ce qui fait que la feuille de verte a encore une propension au bombage très grande et difficilement maîtrisable ; or les vitrages de forme complexe ne sont pas nécessairement des vitrages fortement bombés. Les procédés de bombage-trempe sur un lit de conformation à profil courbe apportent une solution très satisfaisante à ce problème de la maîtrise de la courbure en raison du soutien permanent des feuilles de verre par les rouleaux et du fait que les feuilles de verre sont trempées directement après leur bombage sans avoir à être transférées d'un poste de bombage à un poste de trempe.

L'objectif de la présente invention est d'élargir l'éventail des formes de vitrages susceptibles d'être produites industriellement à partir d'une installation de bombage-trempe opérant par défilement des feuilles de verre sur un lit de conformation définissant une trajectoire à profil courbe dans le sens de défilement du verre, ceci par exemple en vue de la réalisation par ce type d'installation de la quasi totalité des vitrages montés sur les côtés et à l'arrière des véhicules automobiles.

Conformément à la revendication 1, cet objectif est atteint en faisant défiler les feuilles de verre préchauffées à la température de bombage sur un lit de conformation, selon une trajectoire à profil courbe s'appuyant substantiellement sur un cône de révolution, les feuilles de verre étant refroidies lors de leur défilement. De préférence, cette trajectoire conique est tangente à la trajectoire plane des feuilles de verre dans le four ce qui évite les phénomènes de cassure. En d'autres termes, la feuille de verre suit une trajectoire de préférence ascendante et inclinée de côté.

Le chemin suivi par la feuille de verre est généré par un ensemble de courbes transformées les unes des autres dans des homothéties d'un même centre constituant le sommet du cône, la droite reliant deux points alignés sur une perpendiculaire à l'axe du four à leur entrée dans le poste de bombage étant constamment confondue avec une droite joignant un ensemble de points homothétiques. De préférence, ces courbes sont des ellipses ou cercles de sorte que le chemin suivi par la feuille de verre est porté par une surface conique à base ellipsoïdale ou circulaire. Dans le cas d'un cône de révolution, on obtient donc un rayon de courbure constant longitudinalement mais variant de façon continue transversalement à la trajectoire de la feuille de verre.

Par ailleurs à cette courbure principale acquise par la trajectoire longitudinale peut venir s'ajouter une courbure secondaire transversale.

A la suite de cette opération de bombage, les feuilles de verre subissent un refroidissement contrôlé pour maintenir la stabilité de la forme. Ce refroidissement est par exemple du type trempe thermique s'agissant de vitrages destinés à équiper les panneaux latéraux ou arrières de véhicules automobiles; il peut également être procédé à un refroidissement relativement doux, pour une simple remise à basse température de la feuille de verre, en vue par exemple d'un assemblage par feuilletage des vitrages.

De préférence l'entraînement de la feuille de verre est effectué d'une manière telle que les durées de trajet de tous les points de la surface de la feuille de verre sont identiques, ceci même si une trajectoire non plane, sous entend une distance à parcourir différente pour deux points distincts pénétrant simultanément sur le lit de conformation et donc situés sur la même perpendiculaire à l'axe du four. Un point intérieur à la trajectoire centrale, ayant une distance plus courte à parcourir, sera donc entraîné plus lentement qu'un point extérieur ayant lui une distance plus longue à parcourir. De cette façon on évite les phénomènes de patinage qui tendent à affecter la qualité optique des vitrages obtenus.

L'invention a également pour objet une machine de bombage de feuilles de verre comportant un lit de conformation substantiellement conique, qui tangente de préférence le plan défini par les génératrices supérieures du convoyeur d'amenée des feuilles de verre, et comportant également des buses de soufflage.

De préférence, cette machine est munie, de manière connue, de caissons de soufflage de trempe dont les buses sont dirigées entre les dernières tiges conformatrices de sorte que la feuille de verre est simultanément bombée et trempée ou plus précisément sa partie arrière est bombée tandis que sa partie avant déjà bombée est trempée ; encore qu'il peut être noté que l'invention n'est pas nécessairement liée à l'obtention de vitrages trempés et que ces caissons de soufflage de trempe peuvent être remplacés par des moyens de refroidissement aptes à abaisser la température de la feuille de verre en-dessous de la température de bombage en vue de figer sa forme définitive.

Selon que l'on souhaite ou non conférer une courbure secondaire à la feuille de verre, on utilisera des tiges conformatrices dont les lignes d'appui des feuilles de verre sont non rectilignes ou rectilignes pour constituer ainsi une surface substantiellement conique ou effectivement du type conique de révolution. Dans le premier cas, on pourra employer des éléments tournants du type paraboloïde de révolution ou encore des tiges cintrées entourées de gaines mues en rotation, des éléments de ce type étant bien connus de l'homme de l'art notamment du brevet FR-B-1 476 785. A noter que des tiges courbes asymétriques peuvent être employées pour l'obtention de certaines formes spécifiques. Dans le second cas, les tiges conformatrices présentent une ligne d'appui rectiligne ; elles seront alors de préférence constituées par des éléments tournants du type rouleau. En vue d'égaliser les durées de trajet de tous les points de la surface de la feuille de verre, on utilisera de préférence des rouleaux tronconiques au moins dans la zone d'appui des feuilles de verre - et ayant éventuellement des extrémités droites, ce qui simplifie leur montage et leur entraînement en rotation.

Le lit de conformation étant conique avec une concavité de préférence tournée vers le haut, ce qui est plus particulièrement adapté au cas des feuilles de verre émaillées par exemple sur leur pourtour en vue d'une pose par collage, la friction de la feuille de verre contre les éléments tournants des tiges conformatrices peut ne pas suffire à entraîner correctement la feuille de verre, surtout au niveau de la zone éventuelle de soufflage de trempe où il faut vaincre en plus de la force exercée par le poids du verre, la force contraire à l'avancement due à la barrière formée par l'air froid soufflé perpendiculairement à la surface de la feuille de verre. Auquel cas, la machine de bombage doit être munie d'éléments disposés au-dessus des tiges conformatrices et coopérant avec elles pour faire progresser les feuilles de verre. Ces éléments supérieurs peuvent être constitués à l'identique des éléments inférieurs réalisant le lit de conformation.

D'autres détails et caractéristiques avantageuses ressortent de la description faite ci-après en référence aux dessins annexés qui représentent :
· **figure 1** : un schéma en vue de dessus d'une ligne de bombage avec un lit de conformation à courbure longitudinale cylindrique, en vue de l'obtention d'une forme de vitrage du type schématisé à la figure 1 bis,
· **figure 2** : un schéma en vue de dessus d'une ligne de bombage avec un lit de conformation selon l'invention, en vue de l'obtention d'une forme de vitrage du type schématisé à la figure 2 bis,
· **figure 3** : une vue schématique en perspective d'une machine de bombage selon l'invention, avec la partie supérieure soulevée,
· **figure 4**: un rouleau plus particulièrement adapté à la réalisation du lit de conformation de la machine selon l'invention.

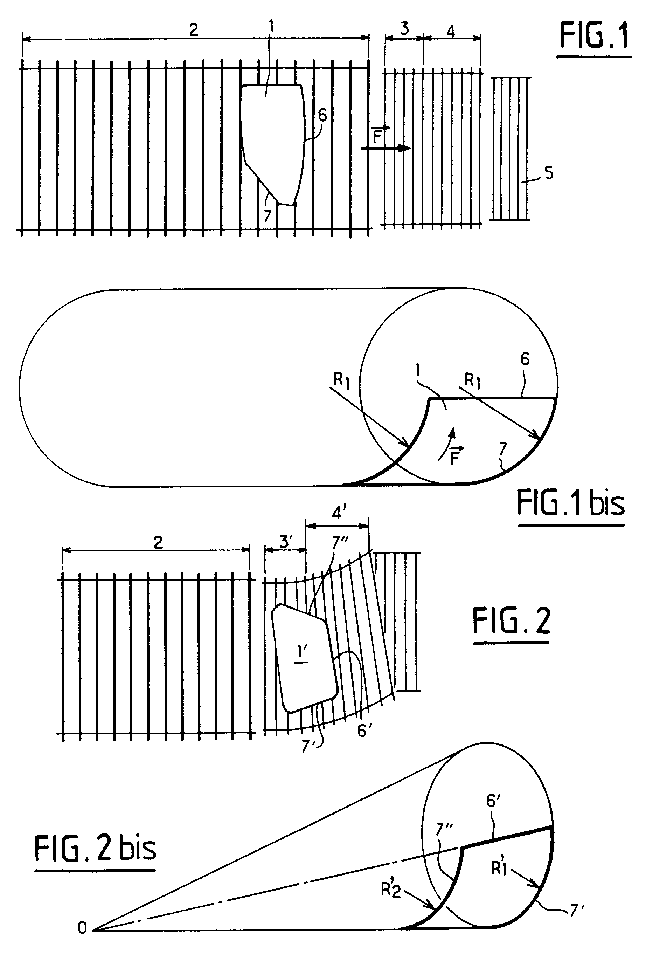

Les figures 1 et 1bis permettent d'illustrer l'état de la technique connu notamment du brevet FR-B-2 442 219, seuls les éléments de convoyage ayant été représentés pour plus de clarté. Selon cet art, la feuille de verre 1 traverse en premier lieu une zone de réchauffage 2 où elle est véhiculée par un convoyeur horizontal constitué par une série de rouleaux moteurs. A la sortie de la zone de réchauffage 2, sa température étant alors supérieure ou égale à sa température de bombage, elle pénètre dans la zone de bombage 3 dans laquelle les rouleaux sont montés selon un profil cylindrique longitudinalement, avec un rayon R₁. Les rouleaux forment ainsi un lit de conformation de préférence à concavité tournée vers le haut et en cheminant (de gauche à droite sur la figure 1) sur ce lit ; les feuilles de verre acquièrent ainsi une courbure cylindrique avec un rayon de courbure R₁, obtenue sous l'action combinée de la gravité, d'éventuels éléments supérieurs et de leur vitesse. La zone de bombage 3 est suivie d'une zone de trempe 4 où les rouleaux sont disposés de même selon un cylindre de cercle de rayon R₁. Les feuilles de verre trempées sont enfin évacuées par un convoyeur plan 5, un dispositif basculant facilitant éventuellement leur sortie de la zone de trempe 4.

Perpendiculairement à la courbure principale de rayon R₁, donc dans le cas exemplifié à la figure 1bis, parallèlement aux bords droits 6, on peut éventuellement conférer à la feuille de verre une courbure secondaire de rayon r₃, r₃ étant de préférence supérieur à 20 mètres, cette limite faisant référence à des considérations techniques relatives à la construction de rouleaux en forme. Mais il doit être bien noté que cette seconde courbure est perpendiculaire à la courbure principale s'appliquant aux bords 7.

Les figures 2 et 2bis illustrent l'invention. En quittant la zone de réchauffage 2, identique à la zone 2 de la figure 1, la feuille de verre 1′ pénètre dans la zone de formage 3′, dans laquelle des tiges conformatrices sont disposées selon un profil conique de sommet O. La feuille de verre 1′ défile ainsi sur un lit de conformation du type "virage relevé", qui non seulement la déplace verticalement mais aussi lui fait subir une rotation. Il en résulte une forme de vitrage conique, avec une courbure principale variant de façon continue le long d'une ligne 6′ initialement perpendiculaire à l'axe du four, le bord extérieur 7′ ayant dans cet exemple un rayon de courbure R₁′ et le bord intérieur un plus petit rayon de courbure R₂′, les termes extérieur et intérieur se référant ici au cône de centre O et les rayons de courbure R₁′ et R₂′ étant compris typiquement entre 1 mètre et l'infini.

La zone de formage 3′ est comme précédemment suivie d'une zone de trempe 4′ dont les rouleaux sont disposés dans le prolongement de ceux de la zone de formage 3′. La feuille de verre trempée 1′ est ensuite évacuée par un convoyeur 5′, ou de préférence deux convoyeurs, le premier réorientant la feuille de verre dans l'axe de la ligne de production, d'autres systèmes d'évacuation peuvent être également envisagés, par exemple du type bras à ventouse.

Si les tiges conformatrices présentent une surface d'appui du verre droite, les bords 6′ parallèles aux rouleaux du four 2′ ne sont pas bombés. Par contre, une courbure secondaire transversale selon un rayon r₃ peut être conférée par l'emploi de tiges conformatrices en forme, telles par exemple des paraboloïdes de révolution.

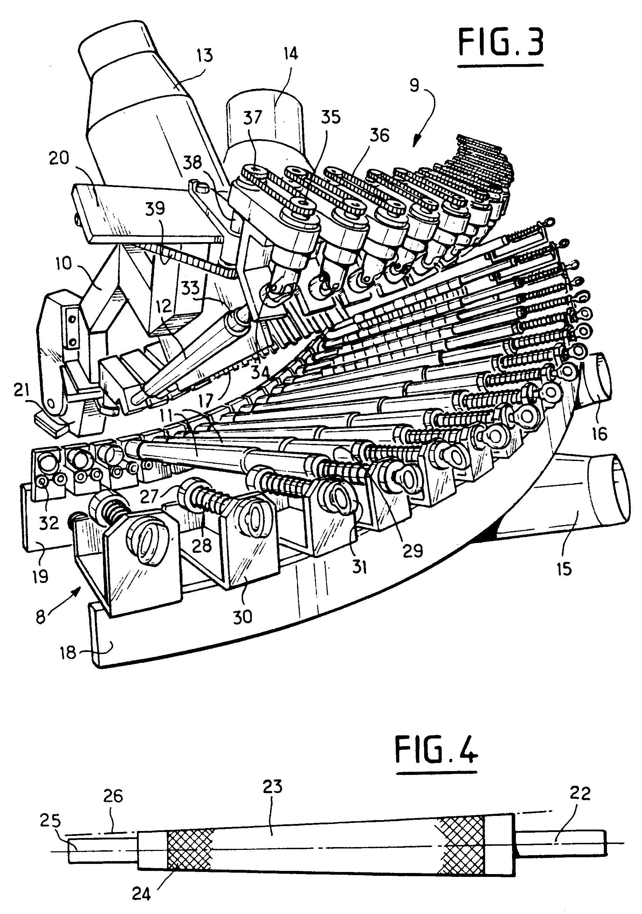

La figure 3 montre les éléments essentiels d'une machine de bombage selon l'invention, figurée ici entrebaillée en position d'entretien afin de mieux visualiser le lit de conformation. Cette machine de bombage dont la largeur dépend de la taille maximale des feuilles de verre à bomber, est de préférence montée sur un chariot porté par des roues, ce qui permet de constituer un bloc autonome facilement interchangeable.

La machine de bombage est constituée par un ensemble inférieur 8 et un ensemble supérieur 9 supporté par un bras articulé 10 permettant l'entrebâillement de la machine dans laquelle le verre chemine de gauche à droite de la figure, donc en s'élevant.

Dans le cas ici illustré, l'ensemble inférieur 8 comporte 17 tiges conformatrices 11, les trois premières ayant été retirées. La toute première de ces tiges peut en fait constituer le dernier rouleau du convoyeur, acheminant les feuilles de verre au travers du four de réchauffage, c'est-à-dire que sa génératrice sur laquelle s'appuie la feuille de verre est rigoureusement dans le plan défini par les génératrices supérieures des rouleaux du four, une telle mesure permettant d'éviter la formation d'une cassure qui constituerait par la suite un défaut optique.

L'ensemble supérieur 9 comporte de même 17 tiges conformatrices 12 dont seule la première est clairement distinguable dans la figure 3. La surface générée par les tiges conformatrices 11, ou respectivement 12 est conique. Lorsque la machine est fermée, l'espace entre deux tiges opposées 11, 12 correspond substantiellement à l'épaisseur de la feuille de verre.

Les 2 x 7 premiers rouleaux, comptés à partir de l'extrémité côté four, constituent la zone de formage proprement dite. Au-delà commence la zone de trempe ou plus généralement de refroidissement. Pour cela, entre les tiges conformatrices 11 et 12, on dispose des buses de soufflage 17 alimentées en air comprimé par les conduits 13, 14, 15 et 16 sur lesquels viennent se raccorder des conduites fixées à demeure dans l'usine. La quantité d'air soufflé doit être propre à assurer à la feuille de verre pendant son temps de défilement une trempe thermique conforme aux normes les plus sévères de l'automobile. Dans cette zone, on peut utiliser de manière connue, des tiges conformatrices plus minces et munies de bagues sur lesquelles roulent les feuilles de verre.

Toutes les tiges conformatrices 11 de l'élément inférieur sont montées d'une manière telle que les génératrices définissant le lit de conformation de la feuille de verre soient concourantes. Pour ce faire les paliers des tiges conformatrices sont montés sur des arceaux extérieur 18 et intérieur 19 constitués par des poutres métalliques cintrées. De la sorte, on définit un lit de conformation conique réalisé à partir de tiges conformatrices 11 interchangeables car toutes concues de manière identique et d'une même longueur.

De même, les tiges conformatrices 12 de l'ensemble supérieur sont montées sur des arceaux extérieur 20 et intérieur 21.

Comme on peut plus précisément le voir à la figure 4, chaque tige conformatrice 11, 12 est faite d'une âme 22 entourée par un corps tronconique 23, l'ensemble étant par exemple réalisé dans un acier inoxydable. La partie tronconique sur laquelle roulent les feuilles de verre est de préférence garnie d'une gaine tubulaire faite dans un tissu 24 en fibres de silice ou autres fibres réfractaires à mailles élastiques, la gaine étant de préférence simplement enfilée autour du corps tronconique 23, sans être collée, et maintenue par ses extrémités. Le tissu absorbe les poussières qui pourraient s'infiltrer entre la feuille de verre et le corps tronconique 23, évitant ainsi la formation de piqûres et de plus empêche la feuille de verre de glisser.

L'arceau extérieur étant d'un rayon plus grand, la feuille de verre doit parcourir, côté extérieur, un chemin plus long que celui parcouru, côté arceau intérieur. Il est néanmoins préférable que le temps de séjour dans l'installation soit identique pour deux points y pénétrant simultanément, faute de quoi la partie intérieure du vitrage subira notamment une trempe moindre que la partie extérieure. A l'encontre des règles générales de cet art, il y a donc ici avantage à entraîner la feuille de verre à une vitesse directement proportionnelle à la longueur à parcourir ou en d'autres termes selon une vitesse modulée transversalement à la direction de défilement. C'est ce qui permet très exactement de réaliser un rouleau de forme tronconique dont la vitesse tangentielle est évidemment variable selon la longueur et d'autant plus grande que le diamètre est grand, étant entendu que le premier rouleau de la machine doit alors être monté non avec son axe de rotation 25 aligné sur les axes de rotation des rouleaux cylindriques du four, mais avec sa génératrice supérieure 26 alignée sur les génératrices supérieures des rouleaux du four, ce qui implique bien sûr un montage avec l'axe 25 légèrement soulevé du côté intérieur de la machine. Les autres tiges conformatrices sont de même montées légèrement inclinées avec leurs génératrices supérieures appuyées sur un cône coupé par des sections de rayons R₁′ et R₂′, convergents vers un point commun.

Le montage des tiges conformatrices 11 et 12 est illustré à la figure 3. Une des extrémités est emboîtée dans un manchon 27 monté à l'extrémité d'un axe 28 en libre rotation. Le manchon 27 est pressé sur la tige 11 par un ressort 29. L'axe 28 est par ailleurs posée sur un palier 30 directement fixé à l'arceau 18 et est en outre munie d'une poignée 31 qui permet de rétracter le ressort 29 et de dégager rapidement la tige conformatrice pour la remplacer. A son autre extrémité, côté intérieur pour les tiges conformatrices 11 et côté extérieur pour les tiges conformatrices 12 de l'élément supérieur, chaque tige est guidée par deux roulements 32 et est emboîtée dans un manchon 33 qui - par une transmission articulée 34 - transmet le mouvement de rotation d'une roue dentée 35 entraînée par une channe 36 mue pour sa part par une roue dentée 37 actionnée, via une bielle 38, par une channe 39 commune à toutes les bielles 38 d'un même élément inférieur ou supérieur.

Ce montage permet ainsi d'entraîner toutes les tiges conformatrices à une même vitesse, de manière sûre et ceci bien que leurs paliers ne soit pas coplanaires.

## Revendications

1. Procédé de bombage de feuilles de verre (1) préchauffées à température de bombage par défilement des feuilles de verre selon une trajectoire longitudinale substantiellement conique de révolution, les feuilles de verte étant refroidies lors de leur défilement.

2. Procédé de bombage selon la revendication 1, **caractérisé en ce que** ladite trajectoire substantiellement conique de révolution est tangente à la trajectoire plane des feuilles de verre dans le four de réchauffage.

3. Procédé de bombage de feuilles de verre (1) selon la revendication 1 ou 2, **caractérisé en ce qu'**on confère en outre une courbure secondaire transversale à la feuille de verre.

4. Procédé de bombage de feuilles de verre (1) selon l'une des revendications précédentes, **caractérisé en ce que** la trajectoire des feuilles de verre est ascendante.

5. Procédé de bombage de feuilles de verte (1) selon l'une des revendications précédentes, **caractérisé en ce que** les feuilles de verre subissent également une trempe thermique lors de leur défilement, selon une trajectoire substantiellement conique.

6. Procédé de bombage de feuilles de verre (1) selon l'une des revendications 1 à 4, **caractérisé en ce que** les feuilles de verre (1) sont refroidies de façon douce et contrôlée lors de leur défilement selon la trajectoire substantiellement conique.

7. Procédé de bombage de feuilles de verre (1) selon l'une des revendications précédentes, **caractérisé en ce que** les durées de trajet de tous les points de la feuille de verre (1) sont identiques.

8. Procédé de bombage de feuilles de verre (1) selon l'une des revendications précédentes, **caractérisé en ce que** le chemin suivi par la feuille de verre (1) est porté par une surface conique à base ellipsoïdale ou circulaire.

9. Machine de bombage de feuilles de verre (1) comportant un lit de conformation substantiellement conique de révolution, et des buses de soufflage (17).

10. Machine de bombage de feuilles de verre (1) selon la revendication 9, **caractérisée en ce que** la surface définie par ledit lit de conformation tangente le plan d'amenée (2) des feuilles de verre (1).

11. Machine de bombage selon la revendication 10, **caractérisée en ce que** la concavité dudit lit de conformation est tournée vers le haut.

12. Machine de bombage selon la revendication 9 à 11, **caractérisée en ce que** les lignes d'appui des feuilles de verre (1) sur lesdites tiges conformatrices (11) sont rectilignes.

13. Machine de bombage selon la revendication 9 à 11, **caractérisée en ce que** les lignes d'appui des feuilles de verre (1) sur lesdites tiges conformatrices (11) sont courbes.

14. Machine de bombage selon la revendication 13, **caractérisée en ce que** lesdites tiges conformatrices (11) courbes sont asymétriques.

15. Machine de bombage selon la revendication 11 à 14, **caractérisée en ce que** lesdites tiges conformatrices (11) sont des éléments tournants.

16. Machine de bombage selon la revendication 15, **caractérisée en ce que** lesdits éléments tournants (11) sont tronconiques au moins dans la zone d'appui des feuilles de verre (1).

17. Machine de bombage selon une des revendications 10 à 16, **caractérisée par** des éléments (12) disposés au-dessus dudit lit de conformation, propres à aider au cheminement de la feuille de verre.

18. Machine de bombage selon l'une des revendications 9 à 14, **caractérisée en ce que** toutes les tiges conformatrices (11) sont identiques.

19. Machine de bombage selon la revendication 18, **caractérisée en ce que** les paliers des tiges conformatrices (11) constituées par des rouleaux tronconiques sont portés par deux arceaux (18, 19) en arc de cercle.

20. Machine de bombage selon l'une des revendications 9 à 17, **caractérisée en ce qu'**elle comporte deux caissons de soufflage de trempe dont les buses sont dirigées entre les tiges conformatrices (11) aval.

21. Machine de bombage selon l'une des revendications 9 à 20 **caractérisée en ce qu'**elle comporte en outre un convoyeur récepteur (5).

22. Machine de bombage selon l'une des revendications 9 à 21, **caractérisée en ce que** chaque rouleau (11, 12) est entraîné, par l'intermédiaire d'une transmission articulée, par une chaîne dont la rotation est commandée par une chaîne commune à tous les rouleaux (11, 12) d'un même élément inférieur (8) ou supérieur (9).

## Claims

1. Method of bending glass sheets (1) preheated to bending temperature, by travel of the glass sheets along a longitudinal trajectory having substantially the form of a cone of revolution, the glass sheets being cooled as they travel.

2. Method of bending according to Claim 1, characterized in that said trajectory having substantially the form of a cone of revolution is tangential to the plane trajectory of the glass sheets through the reheating furnace.

3. Method of bending glass sheets (1) according to Claim 1 or 2, characterized in that a transverse secondary curvature is in addition imparted to the glass sheet.

4. Method of bending glass sheets (1) according to one of the preceding Claims, characterized in that the trajectory of the glass sheets is ascending.

5. Method of bending glass sheets (1) according to one of the preceding Claims, characterized in that the glass sheets are also subjected to a thermal toughening as they travel along a substantially conical trajectory.

6. Method of bending glass sheets (1) according to one of Claims 1 to 4, characterized in that the glass sheets (1) are cooled in a gentle and controlled manner as they travel along the substantially conical trajectory.

7. Method of bending glass sheets (1) according to one of the preceding Claims, characterized in that the durations of passage of all the points of the glass sheet (1) are identical.

8. Method of bending glass sheets (1) according to one of the preceding Claims, characterized in that the path followed by the glass sheet (1) is carried by a conical surface having an ellipsoidal or circular base.

9. Machine for bending glass sheets (1), comprising a shaping bed having substantially the form of a cone of revolution, and blowing nozzles (17).

10. Machine for bending glass sheets (1) according to Claim 9, characterized in that the surface defined by said shaping bed is tangential to the feed plane (2) for the glass sheets (1).

11. Bending machine according to Claim 10, characterized in that the concavity of said shaping bed faces upwards.

12. Bending machine according to Claims 9 to 11, characterized in that the bearing lines of the glass sheets (1) on said shaping rods (11) are rectilinear.

13. Bending machine according to Claims 9 to 11, characterized in that the bearing lines of the glass sheets (1) on said shaping rods (11) are curved.

14. Bending machine according to Claim 13, characterized in that said curved shaping rods (11) are asymmetrical.

15. Bending machine according to Claims 11 to 14, characterized in that said shaping rods (11) are revolving elements.

16. Bending machine according to Claim 15, characterized in that said revolving elements (11) are of truncated conical shape at least in the bearing zone of the glass sheets (1).

17. Bending machine according to one of Claims 10 to 16, characterized by elements (12) disposed above said shaping bed, adapted for assisting the advance of the glass sheet.

18. Bending machine according to one of Claims 9 to 14, characterized in that all the shaping rods (11) are identical.

19. Bending machine according to Claim 18, characterized in that the bearings of the shaping rods (11), constituted of truncated conical rollers, are carried by two circular arc shaped girders (18, 19).

20. Bending machine according to one of Claims 9 to 17, characterized in that it comprises two toughening blowing boxes, the nozzles of which are directed between the downstream shaping rods (11).

21. Bending machine according to one of Claims 9 to 20, characterized in that it comprises, in addition, a receiving conveyor (5).

22. Bending machine according to one of Claims 9 to 21, characterized in that each roller (11, 12) is driven, through an articulated transmission, by a chain, the rotation of which is controlled by a chain common to all the rollers (11, 12) of the same lower (8) or upper (9) element.

## Patentansprüche

1. Verfahren zum Biegen von auf Biegetemperatur erhitzten Glasscheiben (1) mittels Durchlaufenlassen der Glasscheiben auf einer im wesentlichen rotationskegelförmigen Längsbahn, wobei die Glasscheiben während ihres Durchlaufs abgekühlt werden.

2. Biegeverfahren nach Anspruch 1, **dadurch gekennzeichnet, daß** die im wesentlichen rotationskegelförmige Bahn tangierend an die ebene Bahn der Glasscheiben im Erwärmungsofen anschließt.

3. Verfahren zum Biegen von Glasscheiben (1) nach Anspruch 1 oder 2, **dadurch gekennzeichnet, daß** der Glasscheibe außerdem eine sekundäre Querbiegung verliehen wird.

4. Verfahren zum Biegen von Glasscheiben (1) nach einem der vorhergehenden Ansprüche, **dadurch gekennzeichnet, daß** die Bahn der Glasscheiben ansteigend verläuft.

5. Verfahren zum Biegen von Glasscheiben (1) nach einem der vorhergehenden Ansprüche, **dadurch gekennzeichnet, daß** die Glasscheiben während ihres Durchlaufs auf einer im wesentlichen kegelförmigen Bahn auch thermisch vorgespannt werden.

6. Verfahren zum Biegen von Glasscheiben (1) nach einem der Ansprüche 1 bis 4, **dadurch gekennzeichnet, daß** die Glasscheiben (1) während ihres Durchlaufs auf der im wesentlichen kegelförmigen Bahn sanft und geregelt abgekühlt werden.

7. Verfahren zum Biegen von Glasscheiben (1) nach einem der vorhergehenden Ansprüche, **dadurch gekennzeichnet,** **daß** die Durchlaufzeiten sämtlicher Punkte der Glasscheibe (1) gleich sind.

8. Verfahren zum Biegen von Glasscheiben (1) nach einem der vorhergehenden Ansprüche, **dadurch gekennzeichnet, daß** der von der Glasscheibe (1) durchlaufene Weg von einer kegelförmigen Fläche mit ellipsoidaler oder kreisrunder Basis getragen wird.

9. Vorrichtung zum Biegen von Glasscheiben (1), die ein im wesentlichen rotationskegelförmiges Formgebungsbett und Blasdüsen (17) umfaßt.

10. Vorrichtung zum Biegen von Glasscheiben (1) nach Anspruch 9, **dadurch gekennzeichnet, daß** sich die von dem Formgebungsbett gebildete Oberfläche tangierend an die Transportebene (2) der Glasscheiben (1) anschließt.

11. Biegevorrichtung nach Anspruch 10, **dadurch gekennzeichnet, daß** das Formgebungsbett nach oben hin konkav ist.

12. Biegevorrichtung nach Anspruch 9 bis 11, **dadurch gekennzeichnet, daß** die Auflagelinien der Glasscheiben (1) auf den Formgebungsstangen (11) gerade sind.

13. Biegevorrichtung nach Anspruch 9 bis 11, **dadurch gekennzeichnet, daß** die Auflagelinien der Glasscheiben (1) auf den Formgebungsstangen (11) gekrümmt sind.

14. Biegevorrichtung nach Anspruch 13, **dadurch gekennzeichnet, daß** die Formgebungsstangen (11) asymmetrisch gekrümmt sind.

15. Biegevorrichtung nach Anspruch 11 bis 14, **dadurch gekennzeichnet, daß** die Formgebungsstangen (11) drehbare Elemente sind.

16. Biegevorrichtung nach Anspruch 15, **dadurch gekennzeichnet, daß** die drehbaren Elemente (11) wenigstens im Auflagebereich der Glasscheiben (1) kegelstumpfförmig sind.

17. Biegevorrichtung nach einem der Ansprüche 10 bis 16, **dadurch gekennzeichnet, daß** über dem Formgebungsbett angeordnete Elemente (12) zur Unterstützung des Durchlaufs der Glasscheibe vorgesehen sind.

18. Biegevorrichtung nach einem der Ansprüche 9 bis 14, **dadurch gekennzeichnet, daß** sämtliche Formgebungsstangen (11) gleich sind.

19. Biegevorrichtung nach Anspruch 18, **dadurch gekennzeichnet, daß** die Lager der aus kegelstumpfförmigen Wellen bestehenden Formgebungsstangen (11) von zwei kreisbogenförmigen Bögen (18, 19) getragen werden.

20. Biegevorrichtung nach einem der Ansprüche 9 bis 17, **dadurch gekennzeichnet, daß** sie zwei Abschreckblaskästen enthält, deren Düsen zwischen die Formgebungsstangen (11) des Endteils gerichtet sind.

21. Biegevorrichtung nach einem der Ansprüche 9 bis 20, **dadurch gekennzeichnet, daß** sie außerdem einen aufnehmenden Förderer (5) umfaßt.

22. Biegevorrichtung nach einem der Ansprüche 9 bis 21, **dadurch gekennzeichnet, daß** jede Welle (11, 12) über eine gelenkige Transmission durch eine Kette angetrieben ist, deren Rotation von einer sämtlichen Rollen (11, 12) ein und desselben unteren (8) oder oberen Elements (9) gemeinsamen Kette gesteuert wird.
